# EUROPEAN PATENT APPLICATION

(11) **EP 4 736 991 A1**
(43) Date of publication of application: **06.05.2026**
(21) Application number: 23943507.6
(22) Date of filing: 28.06.2023
(51) Int. Cl.: B01D 53/30, H05H 1/24, B01J 19/12

(54) **METHOD AND DEVICE FOR BREAKING DOWN CARBON DIOXIDE**

(71) Applicant: CO2 Breakers, S.L., 28232 Las Rozas-Madrid (ES); Consejo Superior de Investigaciones Científicas (CSIC), 28006 Madrid (ES); Universidad De Zaragoza, 50009 Zaragoza (ES); Universidad de la Laguna, 38200 S.Cristobal de la Laguna-S.Cruz de Tenerife (ES)
(72) Inventor: MORO FRANCO, Eusebio, 28232 Las Rozas-Madrid (ES); DE LA FUENTE LEIS, Germán, 28006 Madrid (ES); MOLINA MANSILLA, Ricardo, 28006 Madrid (ES); NUÑEZ COELLO, Pedro Felipe, 38200 San Cristobal de la Laguna- Santa Cruz de Tenerife (ES); ANGUREL LAMBAN, Luis Alberto, 50009 Zaragoza (ES)
(74) Representative: Clarke, Modet y Cía., S.L.
(86) International application number: PCT/ES2023/070417
(87) International publication number: WO 2025/003533

(57) **Abstract**

The present invention relates to a method and device for transforming carbon dioxide (CO₂) into its elements, C and O₂, by means of the combined use of laser irradiation (4) and dielectric barrier discharge plasma (1) which are applied to high-melting-point ceramic or metallic substrate catalysts in a chamber (2). In this way, laser radiation increases the temperature only in the area in which it is applied, to the catalysts, in order for the emission plasma to reach a temperature close to 3400 K, capable of breaking down CO₂, only in that area and not in the entire plasma reactor chamber.

## Description

### TECHNICAL SECTOR

The invention relates to the chemical processes sector in general to react gaseous media, as well as apparatus specially adapted for this, as well as in the physical processes sector. More specifically, the invention aims to a method and equipment for breaking down carbon dioxide (CO₂) into its elements.

### PRIOR ART

There is currently an emergency situation in the world, already scientifically verified in numerous publications, with evidence of climate change in which the human factor is decisive and is associated with greenhouse gas emissions from the fossil combustion. One of the possible solutions to mitigate this destructive phenomenon is the reduction of carbon dioxide (CO₂) emissions emanating from many industrial processes, which generates very high environmental and economic costs, both for society in general and for the involved industries, whose activity is vital to maintain the present and economic future of our environment.

In this regard, there are a number of important industries, such as ceramics or cement, whose control of CO₂ emissions is vital to maintain its leading position.

On the other hand, there are passenger and goods transport means whose contribution to greenhouse gas emissions represents a significant percentage of the total. These include air and sea transport vehicles, which surpass other land freight transport means, all based on technologies that make use of fossil fuels.

Among the technologies under development for reduction of carbon dioxide (CO₂) emissions, those based on the use of plasmas to break chemical bonds stand out (Y. Yin et al., Phys. Chem. Chem. Phys., 2021, 23, 7974-7987). In principle, the selection of the plasma type is decisive to avoid recombination reactions that substantially decrease the cleavage process efficiency towards desirable products. These can include C and O₂, or organic products (alcohols and other synthetic fuels) and O₂, for example. Apparently, according to these authors, the maximum cleavage efficiency is obtained by combining a suitable emission plasma with high temperatures, in about 3400 K.

One of the most relevant problems when applying this new technology in the industry is that of scaling-up, since the results obtained in research laboratories suggest the existence of scaling-up limits that can only be exceeded with new designs and innovative geometries, accompanied by complementary technologies to avoid high costs that prevent its large-scale implementation.

The combination of plasmas based on dielectric discharge barriers with catalysts has already been proven, leading to a slight increase in the cleavage efficiency of CO₂ molecule [R. H. Rad et al., Chemical Enginneering Journal 456 (2023) 141072; X. Gao et al., Catalysts 2022, 12, 66]. However, although this combination implies certain improvements, it is not yet sufficient to achieve the cleavage objectives that can be scaled up to an attractive industrial system from the point of view of process efficiency.

On the other hand, the laser is a tool that, according to its emission characteristics, can generate local plasmas and temperatures that are located in the maximum efficiency zone, since it allows to select the plasma type and local temperature at the interface with a suitable substrate, at the same time offering a spatial and temporal control unmatched by any other technology. Likewise, laser technology has been used to promote phenomena in liquids, including molecule transformation from CO₂ to CO [Yan et al., Joule 6, 2735-2744 (2022)].

Therefore, there is a need to develop alternative technologies that can facilitate the scaling-up of these technologies in a little more than experimental state, with an acceptable cost. In turn, these technologies would open the way to a more than likely integration of systems in large facilities, such as industrial chimneys and large ships.

### EXPLANATION OF THE INVENTION

In order to achieve the proposed objectives, mentioned in the previous section, the invention proposes a method for breaking down carbon dioxide, having the characteristics of claim 1.

It has been found that the laser is also very attractive to promote greater efficiency in phenomena of heterogeneous catalysis, activating the catalysts surface with optimal wavelength for this purpose. For this reason, a new method has been developed and tested for breaking down CO₂ using refractory ceramics with electro and photocatalytic properties as a catalyst, to develop dielectric barrier discharge (DBD) type-integrated plasma devices, with geometries adapted to in-line laser scans that facilitate maximum interaction with the gas flow to be transformed. In summary, the present invention starts from the premise of the combined use of laser irradiation, on high melting point catalysts, in a plasma reactor, for breaking down CO₂ into C and O₂; the integration of laser in the plasma reactor allows not having to work at very high temperatures, since the laser radiation increases the temperature only in the zone in which it is applied, on the catalysts, so that the emission plasma reaches a temperature close to 3400 K, capable of achieving CO₂ breaking down, only in that zone and not in the entire chamber of plasma reactor.

The method of the invention also allows the reduction of carbon dioxide CO₂ to CO +1/2O₂, by the combined use of laser and plasma irradiation on high melting point ceramic substrates.

The invention also provides the development of a device that allows the molecules of CO₂ to be broken down into their elements, elemental oxygen (O₂) and carbon (C) in various nanostructured forms. The latter are proposed, in turn, as high added value materials for functional applications on material surfaces for numerous industrial uses.

In this method, laser irradiation occurs with IR, Visible, or UV sources and using lasers emitting in pulsed mode, with nanosecond (ns), picosecond (ps), or femtosecond (fs) pulse widths, or in continuous mode (cw).

On the other hand, plasma is produced by electric discharge, microwaves, and other conventional mechanisms, and in various geometries based on DBD (Dielectric Barrier Discharge) technology and using plasma power sources with continuous (DC) or alternating (AC) input voltage. The output voltage can be between 100 V to 10 kV, the output frequency 1 kHz to 100 kHz, and output power from 0.5 W to 10 kW, with one or more dielectric materials located between the electrodes, gas pressure from 100 Pa to 10 atmospheres. The type of plasma generated can be thermal (thermodynamic equilibrium) or non-thermal (non-thermodynamic equilibrium). Likewise, the use of noble gases, nitrogen, oxygen, carbon dioxide, hydrocarbons, water vapor and combinations between them to generate the plasma is contemplated.

The catalysts can be supported on high melting point ceramic substrates. When manufactured with ceramic substrates, those containing Zirconium, Aluminum, Titanium, Barium, Cerium oxides and other rare earths, as well as alkaline earth, transition metals and group 13 metal oxides have been selected.

When the catalysts are of metal oxides they are preferably based on Ceria (cerium dioxide, CeO₂) doped with one or more transition metal oxides (Scandium, Titanium, Vanadium, Chromium, Manganese, Iron, Cobalt, Nickel, Copper and Zinc; Yttrium, Zirconium, Niobium, Molybdenum, Technetium, Ruthenium, Rhodium, Palladium, Silver and Cadmium; Hafnium, Tantalium, Tungsten, Rhenium, Osmium, Iridium, Platinum, Gold and Mercury) and/or group 13 oxides (Boron, Aluminum, Gallium, Indium, Thallium). Where appropriate, with co-catalysts or promoters of alkali and/or ferrous alkali metal oxides (Lithium, Sodium, Potassium, Rubidium, Cerium, Beryllium, Magnesium, Calcium, Strontium, Barium).

In an alternative embodiment, the catalysts are a combination of two or more transition metal oxides (Scandium, Titanium, Vanadium, Chromium, Manganese, Iron, Cobalt, Nickel, Copper and Zinc; Yttrium, Zirconium, Niobium, Molybdenum, Technetium, Ruthenium, Rhodium, Palladium, Silver and Cadmium; Hafnium, Tantalium, Tungsten, Rhenium, Osmium, Iridium, Platinum, Gold and Mercury) and group 13 oxides (Boron, Aluminum, Gallium, Indium, Thallum). Where appropriate, with promoters of alkali and/or ferrous alkali metal oxides (Lithium, Sodium, Potassium, Rubidium, Cesium, Beryllium, Magnesium, Calcium, Strontium, Barium).

As for the laser, indicate that it can illuminate the ceramic substrate surface in planar or complex geometry, by using conventional optics or a conventional beam movement system (galvanometric or polygonal scanner).

In another embodiment, the laser exclusively illuminates a substrate with catalysts, this being ceramic in nature and complemented by a plasma unit not coupled to the laser-irradiated catalyst.

### DESCRIPTION OF THE DRAWINGS

To complement the description that is being made and in order to facilitate the understanding of the characteristics of the invention, this specification is accompanied by a set of drawings in which, by way of illustration and not limitation, the following has been represented:

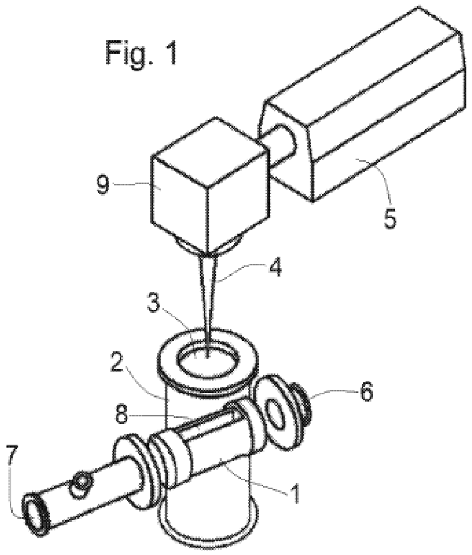

Fig. 1 schematically depicts a chamber (2) used to demonstrate the CO₂ breakdown by laser combination, plasma DBD and a metal oxide as catalyst.

### EMBODIMENT OF THE INVENTION

The device for breaking down carbon dioxide (CO₂) into its elements, C and O₂, comprises: a plasma reactor (1), a laser device (5) and ceramic substrates on which to apply the plasma and laser radiation (4) all integrated into a chamber (2).

The plasma reactor (1) is of the dielectric barrier discharge (DBD) type, which is applied over a high melting point catalyst. The chamber is provided with windows (8) suitable for the transmission through them of laser radiation (4), as well as gas inlets (6) and outlets (7). If necessary, a vacuum pump acting in said chamber (2) can also be connected.

In said reactor (1), plasma is produced by electric discharge, microwaves, or other mechanisms in various geometries, all based on dielectric barrier discharge (DBD) technology and using plasma power sources with continuous (DC) or alternating (AC) input voltage.

Said plasma reactor (1) can have an output voltage between 100 V and 10 kV; an output frequency between 1 kHz and 100 kHz; and an output power between 0.5 W and 10 kW. Likewise, It can use one or more dielectric materials located between the electrodes.

The laser device (5), integrated with the plasma reactor (1), employs IR, visible, or UV sources, and emits in pulsed mode with nanosecond (ns), picosecond (ps), or femtosecond (fs) pulse widths. It can also output in continuous mode (cw).

The laser radiation (4) illuminates the catalytic substrate surface in planar or complex geometry, by using conventional optics or by a beam movement system via galvanometric or polygonal scanner (9).

The laser radiation (4) exclusively illuminates the catalytic substrate surface, supplemented by a plasma unit not coupled to the laser-irradiated catalyst.

The catalysts on the catalytic substrate surface may be ceramic in nature. Catalysts based on high melting point ceramic substrates preferably contain Zirconium, Aluminum, Titanium, Barium, Cerium oxides and other rare earths, as well as alkaline earths and transition metals. The metal oxide catalysts are based on Ceria (cerium dioxide, CeO₂) doped with one or more transition metal and/or other metal oxides. In an alternative embodiment, the catalysts are comprised of a combination of two or more transition metal oxides and group 13 oxides. Where appropriate, with promoters of alkali and/or ferrous alkali metal oxides. Details of substrates, catalysts and co-catalysts have been described in the previous section.

The chamber (2) integrates a part of the plasma reactor (1), so that the windows (8) thereof are oriented towards a window (3) existing in said chamber (2), in which the laser radiation (4) of the laser device (5) is applied.

An experience intended to elaborate a comparison of selective breakdown of CO₂ molecules by plasma DBD, plasma DBD combined with catalyst, laser, laser combined with catalyst, as well as the total combination of a plasma DBD with catalyst and laser is described below. In all cases, the tests described correspond to a static situation in which an explicit CO₂ concentration is started and the change in composition is measured as a function of the treatment (in time and area/affected volume).

The experiments have been carried out in a vacuum chamber, previously evacuated in several vacuum/Argon pressure cycles, in order to reduce the oxygen pressure to a minimum. Inside the chamber (volume 10888 cm³) two fans were installed, one horizontal at the base thereof (vertical forced flow), and another at the exit of a window coupled to the gas meter used. In the same chamber base, also inside, a low-power DBD plasma equipment was placed. The laser was fixed on the top of the camera, on the outside thereof, and directly aligned with a similar size window to that of the laser output lens. Once several vacuum cycles had been carried out in the chamber, it was filled with predetermined Ar + CO₂ mixtures, until constant composition values were reached. At a later stage, plasma, plasma + catalyst, laser, laser + catalyst and plasma + catalyst + laser treatments were carried out independently, in order to find out the different transformation efficiencies in each case and depending on the treatment periods. Table 1 summarizes the obtained results.

**Table 1. Obtained comparative results for CO₂ reduction in % volume per minute and for several of the treatments performed.**

| CO₂ vol% | P | PC | PLₙₛ | PLₙₛC | L_{fs}C | PL_{fs}C |
|---|---|---|---|---|---|---|
| % Vol CO2 reduction/min (vol) | 0.33 | 0.95 | 1.53 | 1.64 | 15.6 | 15.99 |

Wherein:
P = plasma;
PC = plasma + catalyst;
PLₙₛ = plasma + laser (ns);
PLₙₛC = plasma + ns laser + catalyst;
L_{fs}C (fs) = fs laser + catalyst;
L_{fs}C (fs) = plasma + fs laser + catalyst.

As seen in the summarized data in the above table, the most efficient processes for CO₂ breakdown are achieved by combining catalyst and pulsed laser combined with plasma DBDs. The use of the DBD plasma reactor simultaneously prevents that, once the CO₂ transformation into its elements C and O₂ occurs, the reaction between both elements is not reversed.

It is stated for the appropriate purposes that the materials, shape, size and arrangement of the elements described may be modified, as long as this does not imply an alteration of the essential characteristics of the invention that are claimed below:

## Claims

1. Method for transforming carbon dioxide (CO₂) into its elements, C and O₂, by the combined use of laser irradiation and dielectric barrier discharge (DBD) plasma, on high melting point ceramic substrate catalysts, applied in a chamber (2).

2. The method according to claim 1, wherein the laser irradiation occurs with IR, Visible, or UV sources and using lasers emitting in nanosecond (ns), picosecond (ps), or femtosecond (fs) pulse regime, or in continuous mode (cw).

3. Method according to claim 1, wherein the plasma is produced by electric discharge, microwaves, or other mechanisms, in various geometries based on dielectric barrier discharge (DBD) technology.

4. Method according to claim 3, in which the plasma is used with an output voltage between 100 V and 10 kV, an output frequency between 1 kHz and 100 kHz, an output power between 0.5 W and 10 kW, using one or more dielectric materials located between the electrodes.

5. Method according to claim 3, wherein the plasma type generated is thermal (thermodynamic equilibrium) or non-thermal (non-thermodynamic equilibrium).

6. Method according to claim 1, wherein as a catalyst, ceramic substrates containing Zirconium, Aluminum, Titanium, Barium, Cerium oxides and other rare earths, as well as alkaline earth oxides, transition metals and group 13 metals are used.

7. Method according to claim 6, wherein the catalysts are metal oxides based on Ceria (cerium dioxide CeO₂), doped with one or more transition metal oxides (Scandium, Titanium, Vanadium, Chromium, Manganese, Iron, Cobalt, Nickel, Copper and Zinc; Yttrium, Zirconium, Niobium, Molybdenum, Technetium, Ruthenium, Podium, Palladium, Silver and Cadmium; Hafnium, Tantalium, Tungsten, Rhenium, Osmium, Iridium, Platinum, Gold and Mercury) and/or group 13 oxides (Boron, Aluminum, Gallium, Indium, Thallium).

8. Method according to claim 1, wherein the catalysts are made up of a combination of two or more transition metal oxides (Scandium, Titanium, Vanadium, Chromium, Manganese, Iron, Cobalt, Nickel, Copper and Zinc; Yttrium, Zirconium, Niobium, Molybdenum, Technetium, Ruthenium, Rhodium, Palladium, Silver and Cadmium; Hafnium, Tantalium, Tungsten, Rhenium, Osmium, Iridium, Platinum, Gold and Mercury) and group 13 oxides (Boron, Aluminum, Gallium, Indium, Thallum).

9. Method according to any of claims 7 or 8, wherein the catalysts are used with promoters of alkali and/or alkaline earth metal oxides (Lithium, Sodium, Potassium, Rubidium, Cesium, Beryllium, Magnesium, Calcium, Strontium, Barium).

10. Method for breaking down carbon dioxide (CO₂) into CO and O₂, by the combined use of laser and plasma irradiation on high melting point ceramic substrates, applied in a continuous flow reactor.

11. Device for breaking down carbon dioxide (CO₂) into its elements, C and O₂, comprising:
- a dielectric barrier discharge (DBD) type-plasma reactor (1), which is applied over a high melting point catalyst, said plasma reactor (1) being integrated inside a chamber provided with windows (8) suitable for laser radiation transmission (4), and gas inlets (6) and outlets (7);
- a laser device (5), integrated with the plasma reactor (1);
- high melting point ceramic substrate catalysts, on which the plasma and laser radiation (4) are applied, located in a window (3) of a chamber (2); and
- a chamber (2), around the plasma reactor (1), provided with a window (3) in which the laser radiation (4) of the laser device (5) is applied;
wherein the laser radiation increases the temperature only in the zone in which it is applied, on the catalysts, so that the emission plasma reaches a temperature close to 3400 K, capable of achieving CO₂ breaking down, only in that zone and not in the entire chamber of the plasma reactor.

12. Device according to claim 11, wherein the laser employs IR, Visible, or UV sources, and emits in pulsed mode with nanosecond (ns), picosecond (ps), or femtosecond (fs) pulse widths, emits in continuous mode (cw).

13. Device according to claim 11, wherein the laser radiation (4) illuminates the ceramic substrate surface in planar or complex geometry, by using conventional optics or by a beam movement system.

14. Device according to claim 11, wherein the laser exclusively illuminates a substrate with one or more catalysts of a ceramic nature, complemented by a plasma unit not coupled to the laser-irradiated catalyst.

15. Device according to claim 11, wherein the plasma is produced by electric discharge, microwaves, or other mechanisms, in various geometries based on dielectric barrier discharge (DBD) technology and using plasma power sources with continuous (DC) or alternating (AC) input voltage.

16. Device according to claim 11, in which the plasma is used with an output voltage between 100 V and 10 kV, an output frequency between 1 kHz and 100 kHz, an output power between 0.5 W and 10 kW, using one or more dielectric materials located between the electrodes.
